# DEMANDE DE BREVET EUROPEEN

(11) **EP 1 052 575 A1**
(43) Date de publication de la demande: **15.11.2000**
(21) Numéro de dépôt: 00201579.0
(22) Date de dépôt: 02.05.2000
(51) Int. Cl.: G06F 15/173

(54) **Système de transmission, récepteur et réseau d'interconnexion**

(30) Priorité: 11.05.1999 FR 9906020
(71) Demandeur: Koninklijke Philips Electronics N.V., 5621 BA Eindhoven (NL)
(72) Inventeur: Gay-Bellile, Olivier, 75008 Paris (FR); Dujardin, Eric, 75008 Paris (FR)
(74) Mandataire: de la Fouchardière, Marie-Noelle

(57) **Abrégé**

L'invention présente une architecture de réseau programmable pour relier différents modules de calcul dans un récepteur d'un système de transmission de données à très haut débit, le récepteur comportant une chaîne de communication directe et une voie de retour. L'architecture permet de réaliser des communications locales entre des modules de calcul voisins et des communications globales entre des modules de calcul non voisins. Le réseau est constitué d'une suite de cellules d'interconnexion programmables comportant des moyens de stockage pour stocker les données transitant entre deux modules non voisins respectivement sur la chaîne directe et sur la voie de retour. Le rôle de ces mémoires est de garantir que les données traversent au plus deux multiplexeurs successivement en un cycle d'horloge, pour pouvoir choisir une vitesse d'horloge élevée.
Applications : communications large bande, récepteurs de télévision numérique, set top boxes, décodage de canal, démodulation, etc.

## Description

L'invention concerne un système de transmission comportant au moins un émetteur et un récepteur, le récepteur comportant des modules de calcul destinés à communiquer entre eux via un réseau d'interconnexion comprenant une chaîne directe et une voie de retour, ledit réseau servant à réaliser:
- des communications locales unidirectionnelles entre les modules de calcul voisins sur la chaîne directe et la voie de retour et
- des communications globales unidirectionnelles entre les modules de calcul non voisins.

Elle concerne également un récepteur et un réseau d'interconnexion pour relier des modules de calcul dans un système de communication de données comportant une chaîne directe et une voie de retour, ledit réseau servant à réaliser:
- des communications locales unidirectionnelles entre les modules de calcul voisins sur la chaîne directe et la voie de retour et
- des communications globales unidirectionnelles entre les modules de calcul non voisins.

Elle a de nombreuses applications, notamment dans les systèmes de communications numériques large bande pour augmenter la vitesse de communication et diminuer les temps de traitement entre les différents éléments du récepteur et pour fournir une architecture de réseau programmable en fonction du type d'application envisagée.

L'article de T.-Y. Feng paru dans la revue IEEE computer, pages 12-27, datée de Décembre 1981, intitulé 〈〈 A Survey of Interconnection Networks 〉〉 présente notamment une architecture de réseau d'interconnexion ayant une topologie en anneau, dite à deux dimensions, constituée d'une chaîne directe et une voie de retour. L'article ne décrit pas comment les différents composants de l'architecture sont interconnectés entre eux ni comment les communications sont réalisées.

La présente invention décrit un système de transmission, un récepteur et une architecture de réseau programmable pour interconnecter différents composants du récepteur situés sur une chaîne directe et une voie de retour, de façon à réaliser des communications à très haut débit pouvant comporter des boucles de contre-réaction.

Pour cela, il est prévu un système, un récepteur et un réseau tels que mentionnés dans le préambule, remarquables en ce que lesdites communications locales et globales sont réalisées par une suite de cellules d'interconnexion programmables comportant des moyens de stockage pour stocker les données transitant entre deux modules non voisins situés sur au moins la chaîne directe ou la voie de retour.

Selon une caractéristique importante de l'invention, chaque cellule d'interconnexion est reliée à au moins un module de calcul, dit module courant, et comprend des moyens de multiplexage reliés aux cellules voisines pour multiplexer les données provenant des différents modules sur la chaîne directe et la voie de retour, lesdits moyens de stockage étant reliés aux moyens de multiplexage respectivement en amont et en aval dudit module courant pour que lesdites données transitent par l'intermédiaire de deux cellules voisines au plus, en un cycle de calcul.

La description suivante, faite en regard des dessins ci-annexés, le tout donné à titre d'exemple non limitatif fera bien comprendre comment l'invention peut être réalisée.
La figure 1 est un schéma bloc représentant un exemple de récepteur selon l'invention.
La figure 2 représente un exemple de réseau d'interconnexion selon l'invention.
La figure 3 représente des exemples de cellules d'interconnexion selon deux modes de réalisation de l'invention.
La figure 4 est un schéma général d'un système de transmission selon l'invention.

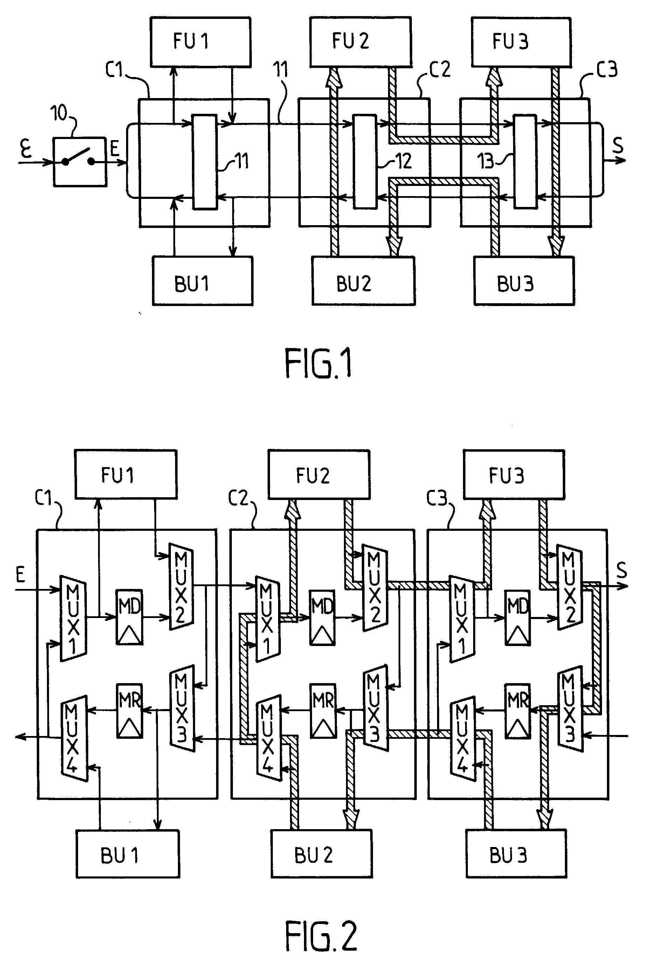

La figure 1 représente un schéma bloc simplifié d'un exemple de récepteur selon l'invention. Elle s'applique en particulier à un récepteur de télévision numérique notamment pour démoduler un signal reçu sous forme d'échantillons de données E et fournir des symboles S en sortie. Le récepteur comporte :
- un bloc de réception 10 pour recevoir un signal d'entrée analogique ε et le convertir en échantillons d'entée numériques E,
- des modules de calcul FU1, FU2 et FU3 formant une chaîne de communication directe,
- des modules de calcul BU1, BU2 et BU3 formant une voie de retour,
- un réseau de d'interconnexion 11 composé :
   - de cellules d'interconnexion programmables notées C1, C2 et C3 pour assurer des communications rapides, représentées en trait épais et à titre d'exemple, entre différents modules de calcul sur la chaîne directe et la voie de retour,
   - et de moyens de stockage 11, 12 et 13 pour stocker les données transitant entre deux modules non voisins respectivement sur la chaîne directe et sur la chaîne de retour.

Les modules de calcul peuvent être différentes unités de filtrage mises en cascade, pour réaliser par exemple: un filtre anti-repliement de spectre, un filtre de Nyquist et un Egaliseur. Plusieurs filtrages numériques successifs sont en effet nécessaires, notamment en télévision numérique pour assurer la fonction de démodulation. De plus, ces démodulations nécessitent des boucles de contre-réaction pour synchroniser le récepteur avec l'émetteur. Pour ces applications ayant de fortes contraintes en terme de puissance et de temps de calcul, l'invention propose une architecture particulièrement bien adaptée de réseau d'interconnexion modulaire comportant des cellules d'interconnexion programmables C1, C2 et C3 munies respectivement des moyens de stockage 11, 12 et 13 pour stocker les données transmises entre deux modules de calcul non voisins afin qu'elles transitent par l'intermédiaire de deux cellules voisines au plus, en un cycle de calcul.

La figure 2 représente plus en détails un mode de réalisation pour le récepteur de la figure 1 et le réseau d'interconnexion 11 selon l'invention.

Un objet de l'invention est de définir un réseau d'interconnexion ayant une topologie simple et pouvant fonctionner à une fréquence élevée. Les connexions utilisent en général des multiplexeurs ou des bus de données pour multiplexer les données provenant des différents modules de calcul sur les différentes chaînes de communication. Or, un bus ne permet de communiquer qu'une seule donnée en un cycle d'horloge. La topologie du réseau d'interconnexion selon invention est définie pour que tous les blocs de calcul puissent fournir et recevoir une donnée à chaque cycle. Le temps de communication entre deux modules voisins étant d'un cycle d'horloge, le temps de transfert des données dépend de la distance parcourue par ces données et donc du nombre de multiplexeurs traversés en un cycle d'horloge. Pour accélérer la vitesse d'horloge du réseau, l'invention prévoit des moyens pour garantir que les données ne traversent pas plus de deux multiplexeurs en un cycle d'horloge.

Le réseau d'interconnexion est composé de plusieurs cellules d'interconnexion successives, capables de réaliser toutes les communications requises par le système. Elles sont notamment programmables pour réaliser :
- des communications locales unidirectionnelles entre les modules de calcul voisins sur la chaîne directe ou la voie de retour,
- des communications globales unidirectionnelles entre les modules de calcul non voisins.

La voie de retour étant susceptible d'être utilisée dans des boudes de contre réaction, des communications locales peuvent donc être réalisées entre deux modules voisins sur la boucle de contre-réaction, c'est-à-dire entre deux modules en vis-à-vis, l'un situé sur la chaîne directe et l'autre sur la voie de retour.

La figure 2 illustre un exemple d'application qui met en oeuvre des communications de données, représentées en trait épais hachurés, entre les modules FU2 et FU3 dans le sens direct et qui réalise une boucle de contre réaction impliquant les modules BU2 et BU3 sur la chaîne de retour. Il peut s'agir par exemple de communications de données entre différents éléments d'un récepteur de télévision numérique pour réaliser le décodage de canal.

Dans le mode de réalisation représenté, chaque cellule Ci (i=1, 2 ou 3) est directement reliée par des multiplexeurs MUX à un module de calcul FUᵢ sur la chaîne directe, dit module courant direct, et à un module BUᵢ sur la chaîne de retour, dit module de retour courant. La cellule comprend en tout quatre multiplexeurs MUX commandés par un organe de contrôle, non représenté, muni d'une horloge pour multiplexer les données provenant des différents modules FUᵢ et BUᵢ des différentes chaînes de communication. Une première mémoire MD, dite mémoire directe, est reliée aux deux multiplexeurs MUX₁ et MUX₂ qui sont situés sur la chaîne directe, respectivement en amont et en aval du module courant direct FUᵢ et une deuxième mémoire MR, dite mémoire de retour, est reliée aux deux multiplexeurs MUX₃ et MUX₄ sur la voie de retour, situés respectivement en amont et en aval du module de retour courant BUᵢ.

Le premier multiplexeur MUX₁ a une première entrée pour recevoir les données provenant de la chaîne directe, une deuxième entrée pour recevoir les données provenant de la boucle de contre-réaction et une sortie reliée à la mémoire directe MD et au module courant FUᵢ de la chaîne directe. Le deuxième multiplexeur MUX₂ a une première entrée pour recevoir les données stockées dans la mémoire directe MD, une deuxième entrée pour recevoir les données fournies par le module courant de la chaîne directe FUᵢ et une sortie pour transmettre les données d'entrée multiplexées sur la chaîne directe et sur la chaîne de retour via la boucle de contre-réaction. Le troisième multiplexeur MUX₃ a une première entrée pour recevoir des données provenant de la sortie du deuxième multiplexeur MUX₂, une deuxième entrée pour recevoir des données provenant de la chaîne de retour de la cellule voisine et une sortie reliée à la mémoire de retour MR et au module de calcul courant sur la chaîne de retour BUᵢ. Le quatrième multiplexeur MUX₄ a une première entrée pour recevoir les données stockées dans la mémoire de retour MR, une deuxième entrée pour recevoir les données fournies par le module courant de la chaîne de retour BUᵢ et une sortie pour transmettre les données d'entrée multiplexées sur la chaîne de retour et sur la chaîne directe via la boucle de contre-réaction.

Le rôle des mémoires MD et MR, représentées sur la figure par des registres, est de garantir que les données ne traversent pas plus de deux multiplexeurs successivement en un cycle d'horloge. Cela permet de choisir une vitesse d'horloge élevée et donc d'accélérer les communications locales. Comme dans ce type d'applications la plupart des communications sont locales, c'est-à-dire qu'elle s'effectuent de proche en proche entre des modules de calcul voisins, il est plus avantageux de privilégier ce type de communications en adaptant la vitesse de horloge du réseau à ces communications rapides plutôt qu'aux communications lointaines ou globales, beaucoup moins fréquentes.

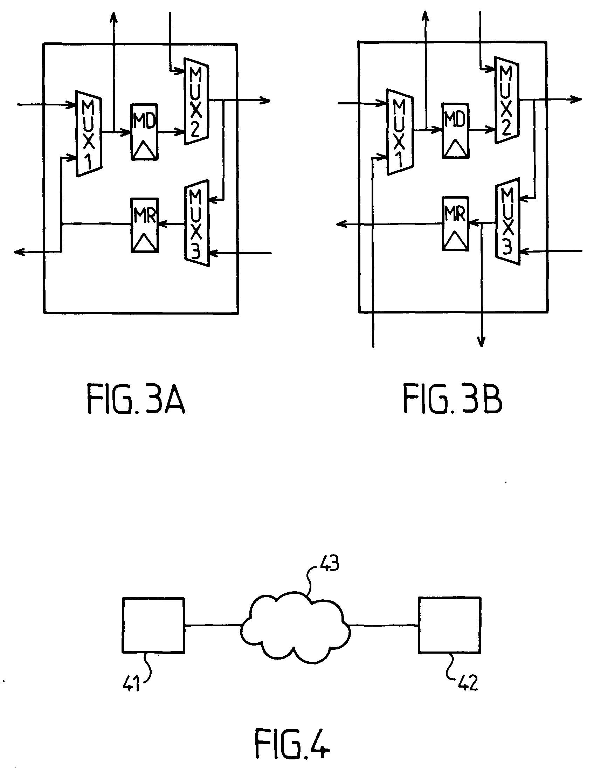

La figure 3 représente deux variantes de réalisation des cellules d'interconnexion selon l'invention comportant trois multiplexeurs programmables MUX₁, MUX₂ et MUX₃. La figure 3A illustre un exemple de cellule dégradée utilisable pour des applications où il manque un module de calcul sur la chaîne de retour. La cellule dégradée n'est directement reliée qu'à un seul module sur la chaîne directe. La sortie du troisième multiplexeur MUX₃ est connectée uniquement au registre MR. La sortie du registre MR est connectée à une entrée du premier multiplexeur MUX₁ et à la voie de retour de la cellule suivante.

La figure 3B illustre un exemple de cellule dégradée utilisable pour des applications comportant une réaction directe entre deux modules FU et BU en vis-à-vis sur la chaîne directe et sur la chaîne de retour. L'entrée du premier multiplexeur MUX₁ est directement connectée à une sortie d'un module de calcul de la chaîne de retour BU et la sortie du registre MR est uniquement relié à la cellule suivante sur la voie de retour.

La figure 4 est un schéma général d'un système de transmission selon invention comportant un émetteur 41, un récepteur 42 du type de celui représenté à la figure 1 et un canal de transmission 43 pour supporter par exemple des transmissions par satellite, par câble ou par voie hertzienne, etc.

## Revendications

1. Système de transmission comportant au moins un émetteur et un récepteur, le récepteur comportant des modules de calcul destinés à communiquer entre eux via un réseau d'interconnexion comprenant une chaîne directe et une voie de retour, ledit réseau servant à réaliser :
• des communications locales unidirectionnelles entre les modules de calcul voisins sur la chaîne directe et la voie de retour et
• des communications globales unidirectionnelles entre les modules de calcul non voisins,
**caractérisé en ce que** lesdites communications locales et globales sont réalisées par une suite de cellules d'interconnexion programmables comportant des moyens de stockage pour stocker les données transitant entre deux modules non voisins situés sur au moins la chaîne directe ou la voie de retour.

2. Système selon la revendication 1, caractérisé en ce que chaque cellule d'interconnexion est reliée à au moins un module de calcul, dit module courant, et comprend des moyens de multiplexage reliés aux cellules voisines pour multiplexer les données provenant des différents modules situés sur la chaîne directe et la voie de retour, lesdits moyens de stockage étant reliés aux moyens de multiplexage respectivement en amont et en aval dudit module courant pour que lesdites données transitent par l'intermédiaire de deux cellules voisines au plus, en un cycle de calcul.

3. Récepteur comportant des modules de calcul destinés à communiquer entre eux via un réseau d'interconnexion comprenant une chaîne directe et une voie de retour, ledit réseau servant à réaliser:
• des communications locales unidirectionnelles entre les modules de calcul voisins sur la chaîne directe et la voie de retour et
• des communications globales unidirectionnelles entre les modules de calcul non voisins,
**caractérisé en ce que** lesdites communications locales et globales sont réalisées par une suite de cellules d'interconnexion programmables comportant des moyens de stockage pour stocker les données transitant entre deux modules non voisins situés sur au moins la chaîne directe ou la voie de retour.

4. Récepteur selon la revendication 3, caractérisé en ce que chaque cellule d'interconnexion est reliée à au moins un module de calcul, dit module courant, et comprend des moyens de multiplexage reliés aux cellules voisines pour multiplexer les données provenant des différents modules situés sur la chaîne directe et la voie de retour, lesdits moyens de stockage étant reliés aux moyens de multiplexage respectivement en amont et en aval dudit module courant pour que lesdites données transitent par l'intermédiaire de deux cellules voisines au plus, en un cycle de calcul.

5. Réseau d'interconnexion destiné à relier des modules de calcul dans un système de communication de données comportant une chaîne directe et une voie de retour, ledit réseau servant à réaliser :
• des communications locales unidirectionnelles entre les modules de calcul voisins sur la chaîne directe et la voie de retour et
• des communications globales unidirectionnelles entre les modules de calcul non voisins,
**caractérisé en ce que** lesdites communications locales et globales sont réalisées par une suite de cellules d'interconnexion programmables comportant des moyens de stockage pour stocker les données transitant entre deux modules non voisins situés sur au moins la chaîne directe ou la voie de retour.

6. Réseau selon la revendication 5, caractérisé en ca que chaque cellule d'interconnexion est reliée à au moins un module de calcul, dit module courant, et comprend des moyens de multiplexage reliés aux cellules voisines pour multiplexer les données provenant des différent modules situés sur la chaîne directe et la voie de retour, lesdits moyens de stockage étant reliés aux moyens de multiplexage respectivement en amont et en aval dudit module courant pour que lesdites données transitent par l'intermédiaire de deux cellules voisines au plus, en un cycle de calcul.
